**Europäisches Patentamt**

**European Patent Office**

**Office européen des brevets**

(19)

(11) Veröffentlichungsnummer: **0 248 321**

**A1**

(12) # EUROPÄISCHE PATENTANMELDUNG

(21) Anmeldenummer: **87107607.1**

(22) Anmeldetag: **25.05.87**

(51) Int. Cl.⁴: **G05B 19/405**

(30) Priorität: **05.06.86 DE 3618915**

(43) Veröffentlichungstag der Anmeldung:
**09.12.87 Patentblatt 87/50**

(84) Benannte Vertragsstaaten:
**CH DE FR GB IT LI NL**

(71) Anmelder: **Siemens Aktiengesellschaft Berlin und München**
**Wittelsbacherplatz 2**
**D-8000 München 2(DE)**

(72) Erfinder: **Hofmann, Herbert, Dipl.-Ing. (FH)**
**Friedrich-Bauer Strasse 19**
**D-8520 Erlangen(DE)**
Erfinder: **Burger, Karl-Heinrich, Dipl.-Ing. (FH)**
**Im Zollstock 14**
**D-8521 Hessdorf(DE)**
Erfinder: **Schick, Ludwig**
**Gartenstrasse 17**
**D-8521 Grossenseebach(DE)**
Erfinder: **Scheithauer, Gerhard, Dipl.-Ing. (FH)**
**Eskilstunastrasse 34**
**D-8520 Erlangen(DE)**
Erfinder: **Hutzler, Heinrich, Dipl.-Ing. (FH)**
**Jahnstrasse 2A**
**D-8501 Feucht(DE)**

(54) **Verbundsystem aus mehreren über ein Bussystem zusammenwirkenden Steuerungseinrichtungen.**

(57) Mehrere intelligente Komponenten (ST1,ST2) einer Werkzeugmaschinensteuerung stehen in einem Datenaustausch miteinander. Jeder dieser Komponenten (ST1,ST2) ist eine Sensorschaltung (S1,S2) zugordnet, die bei nicht ordnungsgemäßem Betriebszustand der zugehörigen Komponenten (ST1, ST2) eine Störungsmeldung auslöst. Der Komponente (ST), der ein für alle Komponenten (ST1, ST2) vorgesehener Koppelspeicher (KS) zugeordnet ist, ist auch ein Störungsmeldungsregister (R1) beigestellt, das Störungsmeldungen der übrigen Komponenten (ST2) sammelt. Beim Vorliegen von Störungsmeldungen wird durch Steuersignale der Komponente (ST1) mit dem zugeordneten Koppelspeicher (KS) ein Datenverfälschungen ausschließender Betriebszustand für das Verbundsystem ausgelöst.

# Verbundsystem aus mehreren über ein Bussystem zusammenwirkenden Steuerungseinrichtungen

Die Erfindung bezieht sich auf ein Verbundsystem aus mehreren über ein Bussystem zusammenwirkenden Steuerungseinrichtungen, die über einen Koppelspeicher, der einer als Leitsteuerung vorgesehenen Steuerungseinrichtung zugeordnet ist, im Datenaustausch miteinander stehen.

Derartige Systeme liegen beispielsweise bei Werkzeugmaschinensteuerungen vor, bei denen numerische Steuerungen (NC's) und Anpaßsteuerungen (PC's) miteinander im Datenaustausch stehen (DE-OS 33 26 042).

Bei solchen Werkzeugmaschinensteuerungen liegen mit den PC's und NC's intelligente Komponenten vor, deren ordnungsgemäßes Zusammenspiel für einen sicheren Betrieb stets gewährleistet sein muß. Insbesondere beim Zu-und Abschalten der Stromversorgungen der einzelnen Komponenten muß dabei sichergestellt werden, daß nur dann, wenn alle Betriebsspannungen ihren Sollwerten entsprechen, ein Datenaustausch unter den Komponenten zulässig ist.

Aufgabe der Erfindung ist es, ein Verbundsystem der eingangs genannten Art so auszubilden, daß außerhalb eines vorgegebenen regulären Betriebszustandes das Verbundsystem selbsttätig definierte Bereitschaftszustände einnimmt.

Gemäß der Erfindung wird diese Aufgabe dadurch gelöst, daß jeder der Steuerungseinrichtungen mindestens eine Sensorschaltung zugeordnet ist, die bei einer Abweichung vorgegebener Betriebsparameter für die zugeordnete Steuerungseinrichtung von jeweils vorgegebenen Sollwerten eine Störungsmeldung an jeweils einen Prozessor der jeweiligen Steuerungseinrichtung auslöst, daß bei einer Störungsmeldung für die Leitsteuerung von deren Prozessor Steuersignale zum Sperren der Befehlsausgaben sämtlicher anderer Steuerungseinrichtungen über das Bussystem auslösbar sind, daß bei einer Störungsmeldung jeweils einer der übrigen Steuerungseinrichtungen über deren jeweiligen Prozessor und das Bussystem an die Leitsteuerung die Störungsmeldung mitteilbar ist, daß diese Störungsmeldungen in einem Störungsmeldungsregister der Leitsteuerung speicherbar sind, daß mit dem Speichern einer Störungsmeldung vom Störungsmeldungsregister vom Prozessor der Leitsteuerung Steuersignale zum Sperren der Befehlsausgaben sämtlicher anderer Steuerungseinrichtungen an das Bussystem auslösbar sind und daß das Störungsmeldungsregister nur durch einen gezielten Rücksetzbefehl löschbar ist.

Als zu überwachender Betriebsparameter können sowohl die jeweiligen Betriebsspannungen der Steuerungseinrichtungen als auch beliebige andere Meßgrößen zur Anwendung kommen.

Eine erste vorteilhafte Ausbildung der Erfindung ist dadurch gekennzeichnet, daß mit dem Speichern einer Störungsmeldung im Störungsmeldungsregister die Leitsteuerung vom Bussystem abkoppelbar ist. Da im Anschluß an aufgetretene Störungsmeldungen nach einem jeweils systembedingten Zeitverzug mit fehlerbehafteten Daten gerechnet werden muß, wird durch diese Maßnahme die Leitsteuerung sicher vor einer Störbeeinflussung durch diese Daten geschützt.

Eine weitere vorteilhafte Ausbildung der Erfindung ist dadurch gekennzeichnet, daß die Steuersignale zum Sperren der Befehlsausgaben der Steuerungseinrichtungen in diesen jeweils zugeordneten Überwachungsregistern speicherbar sind. Damit erfolgt eine einfache Zwischen speicherung der von der Leitsteuerung generierten Steuersignale für jede der zugeordneten Steuerungseinrichtungen.

In diesem Zusammenhang erweist es sich als besonders vorteilhaft, daß über das Betriebssystem der Steuerungseinrichtungen zyklisch abgefragt wird, ob das zugeordnete Überwachungsregister gesetzt ist. Damit bleibt die zyklische Datenverarbeitung in jeder der Steuerungseinrichtungen stets erhalten.

Wenn jedoch eine sofortige Abschaltung der Steuerungseinrichtung bei Störungen erforderlich ist, erweist es sich als vorteilhaft, daß die Steuersignale zum Sperren der Befehlsausgaben unverzüglich die Prozessoren der jeweils anzusprechenden Steuerungseinrichtungen in einen störungsspezifischen Betriebszustand versetzen.

Dabei kann zum Schutz gegen Fehlbeeinflussungen mit dem Eintreffen von Steuersignalen zum Sperren der Befehlsausgaben einer jeweiligen Steuerungseinrichtung diese vom Bussystem abgekoppelt werden.

Eine weitere vorteilhafte Ausbildung der Erfindung ist dadurch gekennzeichnet, daß den Steuerungseinrichtungen über deren jeweiliges Betriebssystem die Adresse des die gegebenenfalls abzugebenden Störungsmeldungen aufnehmenden Störungsmeldungsregisters mitteilbar ist. Dies ist insbesondere dann günstig, wenn die Störungsmeldungen verschiedener Steuerungseinrichtungen in verschiedenen Störungsmeldungsregistern abzulegen sind.

Dadurch, daß die Steuersignale über gesonderte Steuerleitungen geführt sind, können die Steuersignale zum Sperren der Befehlsausgaben ohne Rücksicht auf das bestehende Bussystem unmittelbar den Steuerungseinrichtungen zugeleitet werden.

Für den Fall, daß neben den Steuerungseinrichtungen auch diesen zugeordneten Erweiterungsgeräte vorgesehen sind, erweist es sich als - schaltungstechnisch ausgesprochen günstig, daß Störungsmeldungen von Erweiterungsgeräten der Steuerungseinrichtungen ebenso wie Störungsmeldungen dieser Steuerungseinrichtungen wirksam sind.

Dadurch, daß das Störungsmeldungsregister manuell rücksetzbar ist, wird sichergestellt, daß nur mit einem gezielten Eingriff des Bedienungspersonals nach einer aufgetretenen Störung ein Wiederanlauf möglich ist.

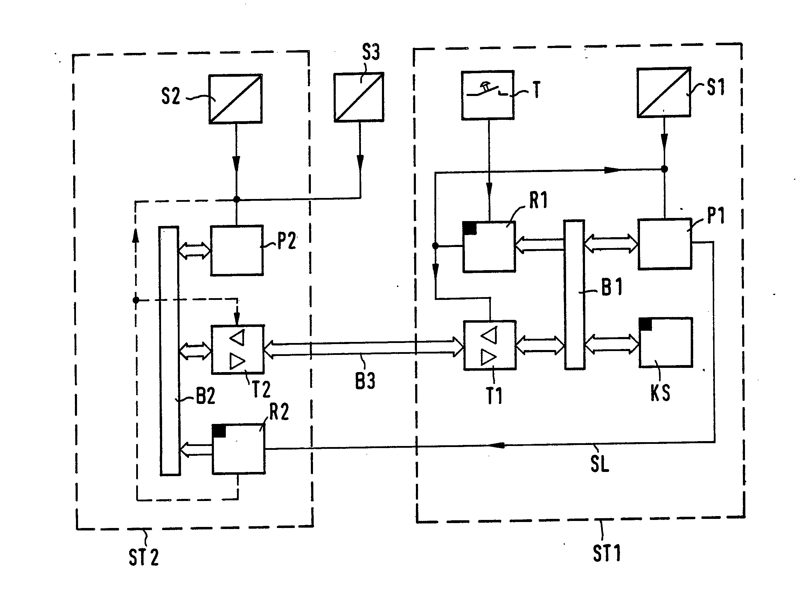

Ein Ausführungsbeispiel der Erfindung ist in der Zeichnung dargestellt und wird im folgenden näher erläutert.

Die Darstellung zeigt zwei Steuerungseinrichtungen ST1 und ST2, die in einem bidirektionalen Datenaustausch miteinander stehen. Dafür weisen die über ein Bussystem B3 und Bustreiber T1 und T2 miteinander verbundenen Steuerungen ST1 und ST2 (gestrichelt angedeutet) einen gemeinsamen Koppelspeicher KS auf, der der Steuerungseinrichtung ST1 zugeordnet ist, die im folgenden als Leitsteuerung bezeichnet wird.

Sowohl die Leitsteuerung ST1 als auch die Steuerung ST2 sind jeweils als intelligente Einheiten ausgebildet, die sowohl einen eigenen Prozessor P1 bzw. P2 als auch ein internes Bussystem B1 bzw. B2 aufweisen. Die Konfiguration der Leitsteuerung ST1 und der Steuerungseinrichtung ST2 kann um ein Vielzahl weiterer Steuerungseinrichtungen ergänzt werden, die ebenfalls an das Bussystem B1 angeschlossen werden können, jedoch wird im Ausführungsbeispiel der Übersichtlichkeit halber nur eine Anordnung aus einer Leitsteuerung ST1 und einer Steuerungseinrichtung ST2 gezeigt. An Hand dieser Anordnung werden alle wesentliche Elemente der Erfindung dargestellt.

Sowohl die Leitsteuerung ST1 als auch die Steuerungseinrichtung ST2 weisen jeweils eine Sensorschaltung S1 bzw.S2 auf, die jeweils eine Störungsmeldung an den Prozessor P1 bzw. P2 leiten, wenn von der Sensorschaltung S1 bzw. S2 detektiert wird, daß die Leitsteuerung ST1 bzw. die Steuerungseinrichtung ST2 in ihrem Betrieb gestört sind. Eine derartige Betriebsstörung mag beispielsweise darin liegen, daß bei der jeweiligen Steuerungseinrichtung, d.h. der Leitsteuerung ST1 bzw. der Steuerungseinrichtung ST2 das jeweils zugeordnete Netzteil ausfällt.

Es sei zunächst der Fall angenommen, daß eine Störungsmeldung von der Sensorschaltung S1 ausgelöst wird. Diese Störungsmeldung wird dann an den Prozessor P1 geleitet, woraufhin dieser zum einen in einen störungsrelevanten Betriebszustand übergeht, zum andern wird über eine Steuerleitung SL ein Steuersignal an ein Überwachungsregister R2 der Steuerungseinrichtung ST2 geleitet, auf dessen Bedeutung im folgenden noch eingegangen wird. Das Überwachungsregister R2 ist mit dem Bussystem B2 der Steuerungseinrichtung ST2 verbunden und wird fortlaufend vom Prozessor P2 abgefragt. Demzufolge wird in der Steuerungseinrichtung ST2 während deren zyklischen Betriebs aus dem Setzen des Überwachungsregisters R2 erkannt, daß eine Störung vorliegt. Daraufhin werden von der Steuerungseinrichtung ST2 keine weiteren Daten über das Bussystem B3 mehr an die Leitsteuerung ST1 abgesetzt, bzw. von dieser abgefragt.

Sofern von der Sensorschaltung S1 keine Störungsmeldung mehr ausgegeben wird, kann vom Prozessor P1 das Steuersignal zum Sperren der Befehlsausgabe der Steuerungseinrichtung ST2 im Überwachungsregister R2 rückgenommen werden, d.h. dieses Register wird rückgesetzt.

Im folgenden wird eine Störung der Steuerungseinrichtung ST2 angenommen. Wenn dabei die Sensorschaltung S2 der Steuerungseinrichtung ST2 eine Störungsmeldung auslöst, falls beispielsweise die Betriebsspannung der Steuerungseinrichtung ST2 einen unzulässigen Wert einnimmt, wird dies von der Sensorschaltung S2 dem Prozessor P2 gemeldet. Dieser nimmt dann einen fehlerspezifischen Betriebszustand ein und gibt eine Störungsmeldung über das Bussystem B2, den Bustreiber T2, das Bussystem B3, den Bustreiber T1 und das Bussystem B1 an ein Störungsmeldungsregister R1 ab, das der Leitsteuerung ST1 zugeordnet ist. Die Adresse, unter der dieses Störungsmeldungsregister R1 von der Steuerungseinrichtung ST2 ansprechbar ist, kann der Steuerungseinrichtung ST2 über deren Betriebssystem eingeprägt sein. Hierzu kann das Betriebssystem anwenderseitig aktiviert werden. Wenn nach einem Lesen dieser Adresse diese zurückgesetzt würde, wäre damit ein selbsttätiger Wiederanlauf der Steuerungseinrichtung ST2 nach Beseitigung einer Störung in der Leitsteuerung ST1 verhinderbar.

Sobald eine Störungsmeldung der Steuerungseinrichtung ST1 im Störungsmeldungsregister R1 der Leitsteuerung ST1 eintrifft, wird von dieser zum einen der Bustreiber T1 abgeschaltet, zum anderen wird eine Störungsmeldung für den Prozessor P1 ausgelöst. Ebenso wie eine Störungsmeldung der Sensorschaltung S1 bei einer Störung der Leitsteuerung ST1, führt auch diese Störungsmeldung beim Prozessor P1 dazu, daß ein störungsrelevanter Betriebszustand für den Prozessor P1 ausgelöst wird und daß über die Steuerleitung SL an alle Steuerungseinrichtungen, im Ausführungsbeispiel nur die Steuerungseinrichtung ST2, ein Steuersignal zum Sperren der zugehörigen Befehlsausgaben geführt wird. Das Steuersignal der Leitsteuerung ST1 setzt dazu das Überwachungsregister R2 der Steuerungseinrichtung ST2. Diese Speicherung des Steuersignals führt dazu, daß bei der zyklischen Abfrage des Überwachungsregisters R2 durch den Prozessor P2 stets erkannt wird, daß eine Befehlsausgabe seitens der Steuerungseinrichtung ST2 nicht erlaubt ist. Dieser eingeleitete Sperrzustand kann nur dadurch aufgehoben werden, daß manuell mit einer Taste T das Störungsmeldungsregister R1 der Leitsteuerung ST1 rückgesetzt wird.

In der Darstellung ist gestrichelt angedeutet, daß es auch möglich ist, daß das Überwachungsregister R2 nicht - wie oben dargelegt - zyklisch vom Prozessor P2 abgefragt wird, sondern daß ein Steuersignal zum Sperren der Befehlsausgabe der Steuerungseinrichtung ST2 unmittelbar auf den Prozessor P2 einwirkt, wobei in diesen Fall auch der Bustreiber T2 schnell zu sperren wäre.

Ferner ist in der Darstellung gezeigt, daß es auch möglich ist, daß nicht nur die Sensorschaltung S2 auf den Prozessor P2 einwirkt, sondern in gleicher Weise auch weitere Sensorschaltungen, z.B. eine Sensorschaltung S3, auf dem Prozessor P2 einwirken könnte, was sich insbesondere dann als vorteilhaft erweist, wenn der Steuerungseinrichtung ST2 ein Erweiterungsgerät zugeordnet ist, das von der Sensorschaltung S3 überwachbar ist.

## Ansprüche

1. Verbundsystem aus mehreren über ein Bussystem zusammenwirkenden Steuerungseinrichtungen, die über einen Koppelspeicher, der einer als Leitsteuerung vorgesehenen Steuerungseinrichtungen zugeordneter ist im Datenaustausch miteinander stehen, **dadurch gekennzeichnet,** daß jeder der Steuerungseinrichtungen (ST1,ST2) mindestens eine Sensorschaltung (S1,S2,S3) zugeordnet ist, die bei einer Abweichung vorgegebener Betriebsparameter für die zugeordnete Steuerungseinrichtung (ST1,ST2) von jeweils vorgegebenen Sollwerten eine Störungsmeldung an jeweils einen Prozessor (P1,P2) der jeweiligen Steuerungseinrichtung (ST1,ST2) auslöst, daß bei einer Störungsmeldung für die Leitsteuerung (ST1) von deren Prozessor (P1) Steuersignale zum Sperren der Befehlsausgaben sämtlicher anderer Steuerungseinrichtungen (ST2) über das Bussystem (B3) auslösbar sind, daß bei einer Störungsmeldung jeweils einer der übrigen Steuerungseinrichtungen (ST2) über deren jeweiligen Prozessor (P2) und das Bussystem (B3) an die Leitsteuerung (ST1) die Störungsmeldung mitteilbar ist, daß diese Störungsmeldungen in einem Störungsmeldungsregister (R1) der Leitsteuerung (ST1) speicherbar sind, daß mit dem Speichern einer Störungsmeldung im Störungsmeldungsregister (R1) vom Prozessor (P1) der Leitsteuerung (ST1) Steuersignale zum Sperren der Befehlsausgaben sämtlicher anderer Steuerungseinrichtungen (ST2) an das Bussystem (B3) auslösbar sind und daß das Störungsmeldungsregister (R1) nur durch einen gezielten Rücksetzbefehl löschbar ist.

2. Verbundsystem nach Anspruch 1, **dadurch gekennzeichnet,** daß mit dem Speichern einer Störungsmeldung im Störungsmeldungsregister (R1) die Leitsteuerung (ST1) vom Bussystem (B3) abkoppelbar ist.

3. Verbundsystem nach Anspruch 1 oder 2, **dadurch gekennzeichnet,** daß die Steuersignale zum Sperren der Befehlsausgaben der Steuerungseinrichtungen (ST2) in diesen jeweils zugeordneten Überwachungsregistern (R2) speicherbar sind.

4. Verbundsystem nach Anspruch 3, **dadurch gekennzeichnet,** daß über das Betriebssystem der Steuerungseinrichtungen zyklisch abgefragt wird, ob das zugeordnete Überwachungsregister (R2) gesetzt ist.

5. Verbundsystem nach einem der vorstehenden Ansprüche, **dadurch gekennzeichnet,** daß die Steuersignale zum Sperren der Befehlsausgaben unverzüglich die Prozessoren (P2) der jeweils anzusprechenden Steuerungseinrichtungen (ST2) in einen störungsspezifischen Betriebszustand versetzen.

6. Verbundsystem nach Anspruch 5, **dadurch gekennzeichnet,** daß mit dem Eintreffen von Steuersignalen zum Sperren der Befehlsausgaben einer jeweiligen Steuerungseinrichtung (ST2) diese vom Bussystem (B3) abkoppelbar ist.

7. Verbundsystem nach einem der vorstehenden Ansprüche, **dadurch gekennzeichnet,** daß den Steuerungseinrichtungen (ST2) über deren jeweiliges Betriebssystem die Adresse des die gegebenenfalls abzugebenden Störungsmeldungen aufnehmenden Störungsmeldungsregister (R1) mitteilbar ist.

8. Verbundsystem nach einem der vorstehenden Ansprüche, **dadurch gekennzeichnet,** daß die Steuersignale über gesonderte Steuerleitungen (SL) geführt sind.

9. Verbundsystem nach einem der vorstehenden Ansprüche, **dadurch gekennzeichnet,** daß Störungsmeldungen von Erweiterungsgeräten der Steuerungseinrichtungen (ST2) ebenso wie die Störungsmeldungen dieser Steuerungseinrichtungen (ST2) wirksam sind.

10. Verbundsystem nach einem der vorstehenden Ansprüche, **dadurch gekennzeichnet,** daß das Störungsmeldungsregister (R1) manuell rücksetzbar ist.

0 248 321

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 263 647 (ALLEN-BRADLEY) <br> * Figuren 2,18; Ansprüche 1-7 * | 1 | G 05 B 19/405 |
| A | | 2-10 | |
| | --- | | |
| A | EP-A-0 065 576 (FANUC) <br> * Seiten 7-11; Figur 1 * | 2-10 | |
| | ----- | | |

RECHERCHIERTE SACHGEBIETE (Int. Cl.4)

G 05 B

Der vorliegende Recherchenbericht wurde für alle Patentansprüche erstellt.

| Recherchenort | Abschlußdatum der Recherche | Prüfer |
|---|---|---|
| DEN HAAG | 08-09-1987 | MOYLE J.F. |